# EUROPÄISCHE PATENTSCHRIFT

(11) **EP 3 517 368 B1**
(45) Veröffentlichungstag und Bekanntmachung des Hinweises auf die Patenterteilung: **03.03.2021**
(21) Anmeldenummer: 18305057.4
(22) Anmeldetag: 25.01.2018
(51) Int. Cl.: B60R 16/02

(54) **KABELBAUMVERBINDER FÜR MODULARE KABELBÄUME**
WIRE HARNESS CONNECTOR FOR MODULAR CABLE HARNESSES
CONNECTEUR DE FAISCEAU DE CÂBLES POUR FAISCEAUX DE CÂBLES MODULAIRES

(43) Veröffentlichungstag der Anmeldung: 31.07.2019
(73) Patentinhaber: Nexans, 92400 Courbevoie (FR)
(72) Erfinder: KESSLER, Thomas, 76356 Weingarten (Baden) (DE); UEBENER, Andreas, 70376 Stuttgart (DE)
(74) Vertreter: Ipsilon

(56) Entgegenhaltungen:
- EP-A1- 1 157 892
- EP-A2- 0 540 319
- DE-A1- 10 000 336
- JP-A- H09 163 557

## Beschreibung

### Gebiet

Die Erfindung betrifft Anordnungen von mehreren Leitungen, die zumindest streckenweise gemeinsam geführt sind, und die an unterschiedlichen Stellen von der gemeinsamen Führung abzweigen. Diese Art Anordnung von Leitungen wird unter anderem in der Fahrzeugtechnik, in der Luft- und Raumfahrttechnik und im Spezialmaschinenbau verwendet. Die Erfindung betrifft außerdem eine Vorrichtung zur Verbindung von Segmenten einer solchen Anordnung zu einer Gesamtanordnung.

### Begriffserklärung

Wenn nicht ausdrücklich anders verwendet steht der Begriff Leitung in dieser Beschreibung für eine elektrische, optische oder fluidführende Verbindung von zwei oder mehr Komponenten eines Systems.

Der Begriff Steuergerät kann in dieser Beschreibung für ein analoges oder digitales Steuergerät eines Bauteils einer technischen Anlage verwendet sein, aber auch für ein zentrales Steuergerät, das mit Modulen oder Bauteilen einer technischen Anlage in Verbindung steht.

### Hintergrund

Räumlich in einer Anordnung an unterschiedlichen Einbauorten verteilte Steuergeräte und Sensoren werden üblicherweise mittels Energie-, Daten- und/oder Signalleitungen verbunden, die dann in der Regel den Konturen des jeweiligen Einbauorts folgend verlegt werden. Bei der Verlegung werden streckenweise oder über ihre gesamte Länge parallel verlaufende Energie-, Daten- und/oder Signalleitungen gebündelt, um einerseits nicht viele einzelne Leitungen sicher befestigen zu müssen und andererseits eine Vorfertigung von Leitungs- oder Kabelsätzen zu ermöglichen, welche dann als Ganzes am Einbauort verbaut werden können. Solche vorgefertigten Kabelsätze werden häufig als Kabelbäume (engl. wire harness) bezeichnet.

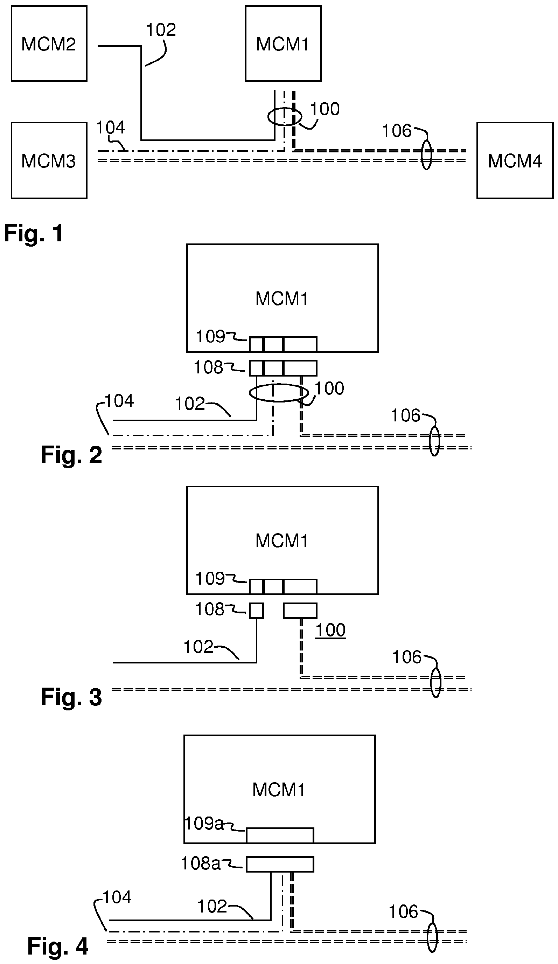

Ein schematisches Beispiel eines aus dem Stand der Technik bekannten Kabelbaums für die Verbindung mehrerer Steuergeräte ist in Figur 1 gezeigt. Ein erstes Steuergerät MCM1 ist mit drei weiteren Steuergeräten, Sensoren oder Aktoren MCM2, MCM3 und MCM4 über einen Kabelbaum 100 verbunden. Kabelbaum 100 umfasst eine Verbindung 102, die das erste Steuergerät MCM1 mit dem Steuergerät, Sensor oder Aktuator MCM2 verbindet. Kabelbaum 100 umfasst außerdem eine Verbindung 104, die das erste Steuergerät MCM1 mit dem Steuergerät, Sensor oder Aktuator MCM3 verbindet. Kabelbaum 100 umfasst ferner eine Verbindung 106, welche Steuergerät, Sensor oder Aktuator MCM4 mit dem ersten Steuergerät MCM1 und dem Steuergerät, Sensor oder Aktuator MCM2 verbindet. Die Verbindungen 102, 104, 106 sind aus Gründen der besseren Übersichtlichkeit durch unterschiedliche Linienarten dargestellt und können jeweils eine oder mehrere Leitungen umfassen.

Kabelbäume werden üblicherweise von darauf spezialisierten Unternehmen hergestellt, während die mittels der Kabelbäume verbundenen Steuergeräte und Sensoren von anderen, jeweils auf diese Art Komponente spezialisierten Unternehmen hergestellt werden. Die arbeitsteilige Herstellung ist kosteneffizient und ermöglicht es zudem, mehrere Hersteller mit der Herstellung identischer Komponenten zu beauftragen, wodurch die Versorgungssicherheit verbessert wird, was insbesondere bei der sogenannten "just-in-time" Produktion wichtig ist, bei der die jeweils benötigten Komponenten idealerweise erst zum Zeitpunkt der Montage angeliefert werden und keine oder nur sehr kleine Lagerbestände für Komponenten am Montageort vorgehalten werden.

Maschinen und Fahr- bzw. Flugzeuge können in vielen Varianten hergestellt werden, bei denen unterschiedliche Steuergeräte und/oder Sensoren verwendet werden. So können z.B. bei einer ersten Variante eines Fahrzeugmotors zusätzliche Sensoren oder Aktuatoren vorgesehen sein, die bei einer zweiten Variante nicht vorhanden sind. Die Sensoren und Aktuatoren müssen mit einem bei allen Varianten vorhandenen Steuergerät verbunden werden, welches entweder für jede Variante gleich ist und lediglich in der Programmierung angepasst wird, oder welches für unterschiedliche Varianten unterschiedlich ist. In jedem Fall ergibt sich die Notwendigkeit, entsprechend angepasste Kabelbäume für jede Variante herzustellen, welche die für die an das Steuergerät anzuschließenden Komponenten passenden Leitungen und Stecker aufweisen.

Es wäre theoretisch möglich einen Kabelbaum herzustellen, der Leitungen für alle möglichen Varianten aufweist, jedoch wird ein solcher Kabelbaum, je nach Anzahl der Varianten, sehr schnell sehr aufwendig herzustellen sein sowie groß und schwer werden. Daher werden bei einer Variante nicht benötigte Leitungen aus Kosten- und Gewichtsgründen üblicherweise in einem für diese Variante vorgesehenen Kabelbaum weggelassen.

Mit der Anzahl der Varianten steigt demnach die Anzahl der benötigten Kabelbäume, was eine Herausforderung für Logistik und Lagerhaltung sowie für die Fertigungsvorbereitung darstellt.

Ein Ansatz dieser Herausforderung zu begegnen ist es, Kabelbäume modular aufzubauen. Dabei wird ein bei allen Varianten gleicher Teil als ein Basismodul separat hergestellt, und die für die jeweiligen Varianten abweichenden Teile des Kabelbaums werden als entsprechende variantenspezifische Variantenmodule hergestellt. Basis- und Variantenmodule werden erst bei der Montage am Einbauort zusammengebracht. Dadurch erhöht sich der Aufwand bei der Verlegung und mechanischen Befestigung der Module nur geringfügig. Allerdings ist die Kontaktierung der einzelnen Kabelbaum-Module aufwändiger, weil jedes Modul des Kabelbaums in der Regel an beiden Enden einen Stecker oder eine andere Kontaktiervorrichtung aufweist, wofür entsprechende Buchsen bzw. Gegenstücke am Sensor, Aktuator oder Steuergerät vorgesehen sein müssen. Insbesondere der Anschluss einer Vielzahl unterschiedlicher Kabelbaum-Module an ein zentrales Steuergerät stellt dabei eine große Herausforderung dar.

Wie auch ein einteiliger Kabelbaum kann ein Kabelbaum-Modul, auch als Segment eines Kabelbaums bezeichnet, eine oder mehrere Leitungen umfassen, wobei innerhalb eines Segments elektrische, optische und/oder fluidführende Leitungen gemeinsam vorliegen können.

Ein schematisches Beispiel für den Anschluss eines modularen Kabelbaums an das Steuergerät MCM1 ist in Figur 2 dargestellt. Die Verbindungen 102, 104 und 106 sind nunmehr als separate Module 102, 104 und 106 des Kabelbaums 100 ausgeführt und mittels zusammenkoppelbarer Steckverbinder 108 am Steuergerät MCM1 angeschlossen. Am Steuergerät MCM1 ist dafür eine entsprechende Buchse 109 vorgesehen.

Es wäre zwar grundsätzlich auch möglich, einzelne, nicht zusammengekoppelte Stecker und Buchsen zu verwenden, allerdings würde sich dadurch die Zahl der beim Anschluss des Steuergerätes MCM1 erforderlichen Arbeitsschritte mit der Anzahl der Stecker erhöhen, und außerdem könnten formgleiche Stecker in falsche Buchsen gesteckt werden.

Figur 3 zeigt den Anschluss einer Variante des modularen Kabelbaums aus Figur 2 an das Steuergerät MCM1. Bei dieser Variante ist die Verbindung bzw. das Kabelbaum-Modul 104 zum Anschluss von Steuergerät, Sensor oder Aktuator MCM3 nicht vorhanden. Der entsprechende Teil des zusammenkoppelbaren Steckverbinders 108 fehlt folglich, und es bleibt eine Lücke in Buchse 109 des Steuergeräts MCM1. Kontakte in dieser Lücke können einerseits frei liegen und Umwelteinflüssen ausgesetzt sein, andererseits bedeutet das Einsetzen einer Kappe oder die Verwendung eines entsprechenden Zwischenstücks zwischen den beiden anderen Teilen des zusammenkoppelbaren Steckverbinders zusätzlichen Material- und Arbeitsaufwand. Außerdem könnte ein Steckverbinder versetzt in die Buchse eingesetzt werden, also nicht an der richtigen Stelle, und so zu Fehlfunktionen führen.

Die Verwendung von modularen Steckverbindern, welche vor dem Einbau zu einem Steckerblock zusammengefügt werden, erhöht hier zwar die Flexibilität bei der Variantenbildung des Kabelbaums und kann den Anschluss an das Steuergerät, den Sensor oder Aktuator erleichtern, bringt aber einen erhöhten Aufwand bei der Abdichtung gegenüber Umwelteinflüssen wie Schmutz und Feuchtigkeit und eine mögliche zusätzliche Fehlerquelle mit sich. So kann es auch bei einem komplett bestückten zusammenkoppelbaren Steckverbinder schwierig sein, zwischen benachbarten Teilen des modularen Steckverbinders unvermeidliche Spalten abzudichten. Außerdem kann eine modulare Anordnung von Teilen eines Steckverbinders, abhängig von der Konstruktion der Ankopplung, gegenüber Vibrationen anfälliger sein als ein einteiliger Stecker. Darüber hinaus sind modulare Steckverbindungen teurer als einteilige Stecker, und bei einer Änderung im Anschluss eines Steuergeräts, Sensors oder Aktuators kann es sein, dass die Belegung in mehreren Teilen des modularen Steckverbinders entsprechend geändert werden muss. Wenn diese Teile von unterschiedlichen Herstellern gefertigt werden bedeutet das einen erheblichen Mehraufwand bei der Koordination. Außerdem müssen dann Ersatzteile für zusätzliche unterschiedliche Varianten vorgehalten werden.

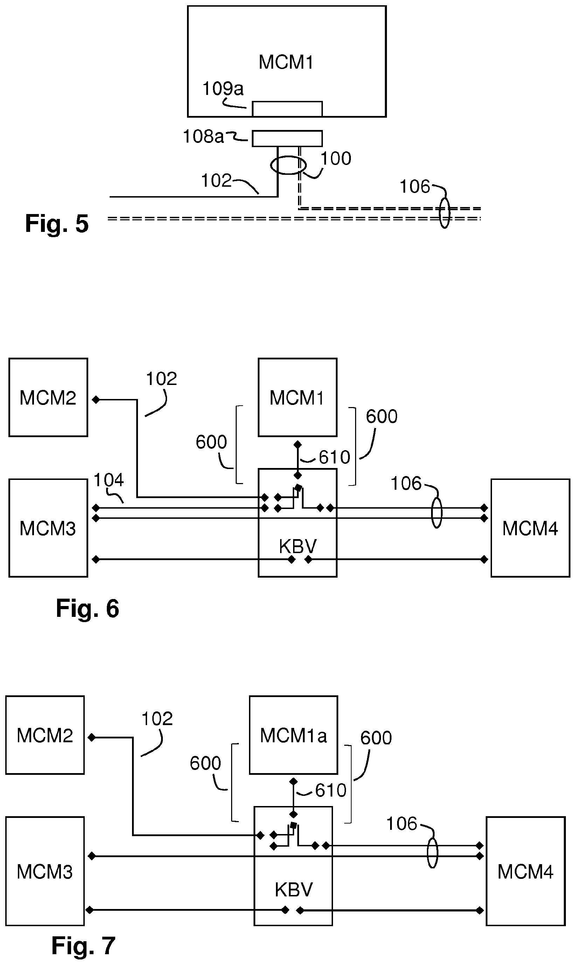

Statt modulare Steckverbindungen zu verwenden ist es möglich, die Leitungen erst bei oder nach der Verlegung der Kabelbaum-Module jeweils in einteiligen Steckerblöcken für jedes Steuergerät und jeden Sensor oder Aktuator zusammenzufassen. Ein schematisches Beispiel für diese Art des Anschlusses eines modularen Kabelbaums an das Steuergerät MCM1 ist in Figur 4 dargestellt. Die Verbindungen 102, 104 und 106 sind wie im zuvor beschriebenen Beispiel als separate Module 102, 104 und 106 des Kabelbaums 100 ausgeführt, jedoch in einem einteiligen Steckverbinder 108a am Steuergerät MCM1 angeschlossen. Am Steuergerät MCM1 ist dafür eine entsprechende Buchse 109a vorgesehen. Auch bei dieser Art des Anschlusses ist eine modulare Zusammenstellung des Kabelbaums möglich, wie in dem in Figur 5 gezeigten schematischen Beispiel dargestellt, bei dem, ähnlich wie in dem in Figur 3 gezeigten Beispiel, die Verbindung bzw. das Kabelbaum-Modul 104 zum Anschluss des Steuergeräts, Sensors oder Aktuators MCM3 fehlt.

Die Bestückung von Steckern mit einzelnen Kontakten beim Einbau eines Kabelbaums in ein Fahrzeug oder eine Maschine ist derzeit nicht maschinell ausführbar. Die manuelle Tätigkeit bei der Zusammenstellung der Leitungen eines Steckerblocks ist zeitaufwändig und fehleranfällig, weil jede Leitung in einer entsprechenden Kammer eines Steckerblocks verankert werden muss. Bei einer fehlerhaften Zuordnung von Leitung und Kammer kann es zu Fehlfunktionen oder sogar zur Zerstörung des angeschlossenen Steuergeräts, Sensors oder Aktuators kommen. Wenngleich eine Korrektur der fehlerhaften Zuordnung von Leitung und Kammer des Steckerblocks möglich ist, ist diese mit zusätzlichem Aufwand verbunden. Außerdem stellt die Abdichtung nicht bestückter Kammern des Steckerblocks eine Herausforderung dar.

Die EP 1 157 892 A1 schlägt eine Verbindungsvorrichtung für Kabelbäume vor, bei der mehrere Leiterbahnen in unterschiedlichen Lagen bzw. Schichten separat geführt sind, welche mittels dazwischenliegender Isolierschichten voneinander getrennt sind. Der Schichtaufbau aus Leiterbahnlagen und Isolierschichten wird zu einer, einer mehrlagigen Leiterplatte nicht unähnlichen, Einheit verbunden. In am äußeren Rand des Schichtaufbaus liegenden Anschlussbereichen für Kabelbäume ist die Isolierschicht diejenigen Leiterbahnen entfernt, welche mit dem jeweiligen Kabelbaum verbunden werden soll, so dass diese vom Rand her kontaktiert werden können. Ein Steuergerät ist wie die Kabelbäume über einen der am Rand liegenden Anschlussbereiche anschließbar.

Grundsätzlich ist es bei aus dem Stand der Technik bekannten modularen Kabelbäumen nicht ohne weiteres möglich, den gesamten Kabelbaum vor dem Einbau funktional zu testen, insbesondere wenn Leitungen zweier mit einem Steuergerät, Sensor oder Aktuator verbundener Kabelbaum-Module innerhalb des Steuergeräts, Sensors oder Aktuators lediglich untereinander verbunden sind. Hierzu wäre beim Test des Gesamtkabelbaums stets der zumindest vorübergehende Anschluss des Steuergeräts, Sensors oder Aktuators nötig, was je nach Einbaureihenfolge und Empfindlichkeit gegenüber bei einem Test auftretenden elektrischen oder mechanischen Belastungen nicht immer möglich ist.

Hiervon ausgehend hat die vorliegende Erfindung die Aufgabe, ein Bauteil für Kabelbäume zu schaffen, das eines oder mehrere der eingangs genannten Probleme überwindet oder deren Nachteile zumindest verringert.

### Zusammenfassung der Erfindung

Zur Lösung dieser Aufgabe schlägt die Erfindung nach einem ersten Aspekt einen Kabelbaumverbinder nach Anspruch 1 mit einem Träger vor. An dem Träger sind zwei oder mehr Segmentanschlüsse zur Aufnahme jeweils eines Kabelbaum-Moduls sowie mindestens ein Anschluss für ein Steuergerät vorgesehen. An dem Träger ist außerdem eine Vorrichtung zum Anschluss von Leitungen der Kabelbaum-Module an den mindestens einen Anschluss für das Steuergerät und/oder zur Verbindung von Leitungen unterschiedlicher Kabelbaum-Module angeordnet.

Der Träger kann Teil eines zwei- oder mehrteiligen Gehäuses oder als separates Bauteil in einem Gehäuse angeordnet sein. Das Gehäuse weist zumindest ein Basisteil und ein Deckelteil auf, die den Innenraum des Gehäuses im geschlossenen Zustand gegen Umwelteinflüsse abdichten. Das Basisteil kann bspw. der Träger sein, auf dem die Kabelbaum-Module anschließ- und/oder befestigbar sind, und auf welchem die Vorrichtung zum Anschluss von Leitungen der Kabelbaum-Module an den mindestens einen Anschluss für das Steuergerät und/oder zur Verbindung von Leitungen unterschiedlicher Kabelbaum-Module angeordnet ist. Das Deckelteil kann mit dem Träger verbunden werden, wobei der Innenraum des Gehäuses zwischen Deckelteil und Träger liegt. Das Deckelteil muss dabei nicht den gesamten Träger überdecken; es ist auch möglich, dass das Deckelteil nur die Vorrichtung zum Anschluss von Leitungen der Kabelbaum-Module an den mindestens einen Anschluss für das Steuergerät und/oder zur Verbindung von Leitungen unterschiedlicher Kabelbaum-Module überdeckt, während andere Bereiche des Trägers frei liegen. Zwischen Deckelteil und Träger können Dichtmittel vorgesehen sein. Das Deckelteil kann mittels form- und/oder kraftschlüssigen Verbindungsmitteln mit dem Träger verbunden sein, z.B. mittels Rastelementen, Klemmen, Schrauben oder Nieten.

Der Träger, das Deckelteil, das Gehäuse oder die Segmentanschlüsse können ferner Dichtmittel und/oder Zugentlastungsmittel aufweisen, die den Innenraum des Gehäuses gegen Umwelteinflüsse abdichten und/oder das jeweils angeschlossene Kabelbaum-Modul oder einzelne Leitungen davon gegen mechanische Zugbelastung und unbeabsichtigtes Lösen des Kabelbaum-Moduls vom Kabelbaumverbinder sichern. Die Abdichtung kann gegen das Eindringen von Festkörpern und/oder Fluiden wirken. Die Segmentanschlüsse können dabei auch zur Aufnahme solcher Kabelumhüllungen eingerichtet sein, bspw. zur Aufnahme von Wellrohren oder Kabelschutzschläuchen, innerhalb derer die Leitungen des jeweiligen Kabelbaum-Moduls geführt sind.

Der Träger oder das Gehäuse des Kabelbaumverbinders können zudem eine Befestigungsvorrichtung aufweisen, mittels derer der Kabelbaumverbinder an oder in der Nähe des Steuergeräts befestigt werden kann. Die Befestigungsvorrichtung kann Mittel zur Befestigung des Kabelbaumverbinders mittels Schrauben umfassen, bspw. Ösen oder Schlitze. Die Befestigungsmittel können aber auch eine selbstklemmende, lösbare, formschlüssige Rastverbindung mit entsprechenden Rastnasen an dem Steuergerät oder allgemein dem Befestigungsort des Kabelbaumverbinders ermöglichen. Die Befestigungsmittel können dabei zur Befestigung an unterschiedlichen Orten vorgesehen sein, wobei eine entsprechende Auswahl an Befestigungsmitteln vorgesehen ist.

Der Träger, das Gehäuse und/oder die mit dem Gehäuse verbundenen Befestigungsmittel können ferner Mittel zur Entkopplung von am Einbauort auftretenden mechanischen Schwingungen aufweisen, z.B. elastische oder federnde Elemente. Dies ist insbesondere dann von Vorteil, wenn das Steuergerät mittelbar über den Träger oder das Gehäuse des Kabelbaumverbinders an dem Einbauort befestigt wird.

Die Vorrichtung zum Anschluss von Leitungen der Kabelbaum-Module an den mindestens einen Anschluss für das Steuergerät und/oder zur Verbindung von Leitungen unterschiedlicher Kabelbaum-Module kann eine Leiterplatte umfassen, die Klemm- oder Steckanschlüsse für die einzelnen Leitungen der Kabelbaum-Module aufweist. Die Klemm- oder Steckanschlüsse sind mit auf der Leiterplatte angeordneten Leiterbahnen verbunden, welche die Leiter der Kabelbaum-Module mit entsprechenden Kontakten oder Anschlüssen des mindestens einen Anschlusses für das Steuergerät verbinden und/oder Leitungen unterschiedlicher Kabelbaum-Module miteinander verbinden. Wenn der mindestens eine Anschluss für das Steuergerät über ein separates Kabelbaum-Modul erfolgt, verbinden die Leiterbahnen die Klemm- oder Steckanschlüsse der Leitungen unterschiedlicher Kabelbaum-Module mit den entsprechenden Klemm- oder Steckanschlüsse der Leitungen dieses separaten Kabelbaum-Moduls. Die Leiterplatte kann integraler Bestandteil der Trägerplatte sein, bspw. als sogenanntes Molded Interconnect Device (MID; Wikipedia: https://de.wikipedia.org/wiki/Molded Interconnect Devices), oder als separate Komponente zum Träger oder Gehäuse hinzugefügt werden.

Es ist aber auch denkbar, dass die Leitungen der Kabelbaum-Module an dem Kabelbaumverbinder-seitigen Ende Steckerblöcke aufweisen, welche in entsprechende, in oder an dem Gehäuse des Kabelbaumverbinders vorgesehene Buchsen gesteckt werden. Auch bei dieser Variante kann eine Leiterplatte vorgesehen sein, wie sie im vorhergehenden Absatz beschrieben wurde.

Der Anschluss für das Steuergerät ist erfindungsgemäss unmittelbar an dem Gehäuse als Steckverbinder ausgeführt nämlich auf der dem Steuergerät im eingebauten Zustand zugewandten Seite des Gehäuses, z.B. der Unterseite des Trägers. In letzterem Fall wird die Verbindung zwischen Kabelbaum und Steuergerät beim Zusammenbau von Steuergerät und Kabelbaumverbinder automatisch hergestellt. Bei dieser Variante ist es zweckdienlich, die Steckverbindung so auszuführen, dass eine Abdichtung der Kontaktstelle gegenüber Umwelteinflüssen erfolgt. Die Temperaturbeständigkeit und Widerstandfähigkeit gegen mechanische Belastungen des Kabelbaumverbinders ist dabei an diejenige des Steuergerätes anzupassen. Außerdem können Mittel zur mechanischen Befestigung des Kabelbaumverbinders am Steuergerät vorgesehen sein, bspw. Ösen für Schrauben oder Nieten, oder eine Rastverbindung.

Der Kabelbaumverbinder kann eine Vorrichtung zur Leitungsführung aufweisen, die ein direktes Durchführen von Leitungen eines Kabelbaum-Moduls ermöglicht. Mittels einer solchen Vorrichtung kann ein Kabelbaum-Modul, von dem einige Leitungen innerhalb des Kabelbaumverbinders abzweigen, durch den Kabelbaumverbinder verlegt werden ohne dass alle Leitungen aufgetrennt werden müssen. Die Vorrichtung zur Leitungsführung kann beispielsweise einen teilweise offenen oder geschlossenen Kabelkanal umfassen, der als Teil des Trägers oder des Gehäuses gebildet ist und einen Durchbruch bzw. eine Öffnung zum Herausführen der im Kabelbaumverbinder angeschlossenen Leitungen aufweist. Der Durchbruch oder die Öffnung können geeignete Dichtmittel aufweisen, um die Dichtigkeit des Kabelbaumverbinders sicherzustellen.

Die Vorrichtung zur Leitungsführung kann aber auch ein nicht im Kabelbaumverbinder kontaktiertes Kabelbaum-Modul aufnehmen, welches lediglich durch den Kabelbaumverbinder hindurch verlegt wird, bspw. um eine sichere Leitungsführung ohne zusätzliche Befestigungsmittel zu gewährleisten. Hierbei können an einer Eintrittsstelle und an einer Austrittsstelle des Kabelbaumverbinders Dichtmittel vorgesehen sein.

Der Kabelbaumverbinder kann passiv sein, d.h. es findet nur eine fest zugeordnete Weiterleitung bzw. Verteilung von über die Leitungen der Kabelbaum-Module zugeführten Signalen, Spannungen, Strömen oder Fluiden statt.

Der Kabelbaumverbinder kann aber auch teilweise aktiv sein, d.h. es können Komponenten in dem Kabelbaumverbinder vorgesehen sein, welche elektrische Signale von einer ersten Form in eine zweite Form wandeln. Die Wandlung von der ersten in die zweite Form kann beispielsweise eine Wandlung von durch Ströme repräsentierte Signale in durch Spannungen repräsentierte Signale oder umgekehrt umfassen, aber auch eine Umsetzung von einem ersten digitalen Kommunikationsprotokoll in ein zweites digitales Kommunikationsprotokoll. Ein Kommunikationsprotokoll in diesem Sinne stellt nicht nur ein logisches Protokoll dar, sondern umfasst auch jeweilige Eigenschaften auf der physikalischen Ebene, also bspw. elektrische Parameter der Kommunikationsverbindung wie Spannungspegel, Frequenzen, Kanalcodierung, etc. Die Wandlung von der ersten in die zweite Form kann auch eine Wandlung von einem analogen Signal in ein digitales Signal umfassen oder eine entsprechend umgekehrte Wandlung. Hierzu können Analog-Digital-Wandler bzw. Digital-Analog-Wandler vorgesehen sein. Die Wandlung von der ersten in die zweite Form kann auch eine Wandlung von einem elektrischen Signal in ein optisches Signal umfassen oder eine Wandlung in umgekehrter Richtung.

Die Komponenten für die Wandlung können auch Sensoren umfassen, die fluidisch zugeführte Signale in elektrische Signale wandeln, bspw. Drucksignale. Hiermit können ohne Änderung an dem Steuergerät neuartige oder zusätzliche Sensoren angeschlossen werden.

Es können auch Schaltungen vorgesehen sein, welche eine Vielzahl von Signalen wahlweise mit einer Signalleitung oder -verbindung des Steuergerätes verbinden, sogenannte Multiplexer. Solche Schaltungen können analoge oder digitale Multiplexer umfassen. Insbesondere wenn von dem Steuergerät ein Steuerausgang bereitgestellt wird lässt sich eine begrenzte Anzahl von Signaleingängen des Steuergerätes mit geringem Aufwand erweitern. Im günstigsten Fall ist dazu nur eine entsprechende Erweiterung der Programmierung des Steuergerätes erforderlich.

Die vorstehend beschriebenen Schaltungen zur Signalwandlung können natürlich auch zusammen mit Schaltungen zur wahlweisen Verbindung in dem Kabelbaumverbinder vorgesehen sein.

Ein zweiter Aspekt der Erfindung betrifft einen mittels eines oder mehrerer der erfindungsgemäßen Kabelbaumverbinder aus Kabelbaum-Modulen zusammengeschalteten Kabelbaum.

Die vorliegende Erfindung ermöglicht es in vorteilhafter Weise, unterschiedliche Segmente, die einzelne Leitungen für dasselbe Steuergerät führen, nicht erst am Steuergerät-Stecker zu verbinden, sondern in dem erfindungsgemäßen Kabelbaumverbinder. Dadurch ist es möglich, den gesamten Kabelsatz/Kabelbaum zu verbinden und durchzutesten, auch wenn noch kein Steuergerät eingebaut ist. Außerdem ist es dadurch möglich, aus einer für mehrere Anwendungsfälle identischen Basis und ein oder mehreren Kabelbaum-Modulen für zusätzliche Varianten bestehende Kabelbäume einfach und flexibel aufzubauen.

Wenn am Ort eines Kabelbaumverbinders unterschiedlichen Steuergeräte anschließbar sein müssen, die mit einer unterschiedlichen Anzahl von Leitungen verbunden sind, welche sogar von unterschiedlichen Segmenten des Kabelbaums herangeführt werden, werden diese im Kabelbaumverbinder zusammengeführt und gemeinsam an das Steuergerät angeschlossen. Der Anschluss an das Steuergerät kann dazu eine Anzahl von Anschlüssen aufweisen, die über alle möglichen Anschlussvarianten hinweg vorkommen kann, wobei nur die jeweils benötigten Anschlüsse tatsächlich im Kabelbaumverbinder verbunden und herausgeführt sind. Der Kabelbaumverbinder-seitige Anschluss kann dann über ein entsprechendes Adapterkabel oder einen in den Kabelbaumverbinder integrierten Stecker mit einem Steuergerät-seitigen Anschluss verbunden sein. Die sich hieraus ergebende Standardisierung des Kabelbaumverbinder-seitigen Anschlusses des Steuergerätes kann zu Kosteneinsparungen führen, bspw. durch eine entsprechende Erhöhung der Stückzahlen. Außerdem können kostspielige und aufwendige Änderungen am Steuergerät dadurch unnötig werden, weil Änderungen in der Anschlussbelegung im Kabelbaumverbinder vorgenommen werden können.

Der erfindungsgemäße Kabelbaumverbinder vermeidet außerdem den Nachteil von modularen Steckersystemen, die schlecht oder nur sehr aufwendig gegen Umwelteinflüsse wie bspw. Staub, Feuchtigkeit, Vibrationen, etc. abzudichten und teurer herzustellen sind als einteilige Stecker.

Kabelbäume oder Segmente davon sind häufig mit Schutzhüllen umgeben, die mehrere Leitungen zusammenfassen und gegen Umwelteinflüsse wie Schmutz, Feuchtigkeit und mechanische Beschädigung schützen. Die Schutzhüllen können mittels umwickeln mit bandförmigen Bahnen hergestellt werden, die ggf. mit sich selbst und/oder den Leitungen verklebt sind, oder vorgefertigte Schläuche oder Rohre umfassen. Die Schutzhüllen können dabei so vorgeformt sein, dass sie einer Kontur eines Einbauorts im dreidimensionalen Raum angepasst sind. Der erfindungsgemäße Kabelbaumverbinder kann in vorteilhafter Weise Segmentanschlüsse bereitstellen, die unabhängig von einem damit verbundenen Steuergerät stets im Wesentlichen an derselben Stelle am Einbauort liegen. Dadurch wird es möglich, einen Teil des gesamten Kabelbaums mit für unterschiedliche Varianten von Steuergeräten, Sensoren oder Aktuatoren gleichen Kabelbaum-Modulen zu realisieren.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: schematisches Beispiel eines aus dem Stand der Technik bekannten Kabelbaums für die Verbindung mehrerer Steuergeräte,
- Fig. 2: ein erstes schematisches Beispiel für den Anschluss eines modularen Kabelbaums an ein Steuergerät,
- Fig. 3: das schematische Beispiel aus Figur 2 bei Anschluss einer Variante eines modularen Kabelbaums an das Steuergerät,
- Fig. 4: ein zweites schematisches Beispiel für den Anschluss eines modularen Kabelbaums an ein Steuergerät,
- Fig. 5: das schematische Beispiel aus Figur 4 bei Anschluss einer Variante eines modularen Kabelbaums an das Steuergerät,
- Fig. 6: eine schematische Darstellung eines modularen Kabelbaums für die Verbindung mehrerer Steuergeräte, Sensoren und/oder Aktuatoren mit einem erfindungsgemäßen Kabelbaumverbinder,
- Fig. 7: die schematische Darstellung einer Variante des modularen Kabelbaums aus Figur 6 mit dem erfindungsgemäßen Kabelbaumverbinder,
- Fig. 8: ein erstes exemplarisches Beispiel eines erfindungsgemäßen Kabelbaumverbinders,
- Fig. 9: ein zweites exemplarisches Beispiel eines erfindungsgemäßen Kabelbaumverbinders,
- Fig. 10: ein drittes exemplarisches Beispiel eines erfindungsgemäßen Kabelbaumverbinders, und
- Fig. 11: eine Variante eines erfindungsgemäßen Kabelbaumverbinders mit Buchsen zum Anschluss von Kabelbaum-Modulen.

Gleiche oder ähnliche Elemente sind in den Figuren mit gleichen oder ähnlichen Bezugszeichen versehen.

Die Figuren 1 bis 5 wurden bereits weiter oben mit Bezug auf den Stand der Technik beschrieben und werden an dieser Stelle nicht erneut erläutert.

### Ausführungsbeispiele

Figur 6 zeigt eine schematische Darstellung eines modularen Kabelbaums für die Verbindung mehrerer Steuergeräte, Sensoren und/oder Aktuatoren mit einem erfindungsgemäßen Kabelbaumverbinder KBV. Die miteinander verbundenen Steuergeräte, Sensoren oder Aktuatoren MCM1, MCM2, MCM3 und MCM4 sowie die Verbindungen 102, 104 und 106 dazwischen entsprechen denen aus Figur 1. Im Unterschied zu den zuvor in den Figure 2 bis 4 beschriebenen modularen Kabelbäumen erfolgt die Verbindung der einzelnen Kabelbaum-Module nicht im Steuergerät MCM1, sondern in dem erfindungsgemäßen Kabelbaumverbinder KBV. Die innerhalb des Kabelbaumverbinders KBV endenden rautenförmigen Enden der Kabelbaum-Module deuten an, dass eine Verbindung mit den entsprechenden Gegenstücken innerhalb des Kabelbaumverbinders KBV erfolgt. Innerhalb des Kabelbaumverbinders KBV sind einzelne Leitungen der Kabelbaum-Module 102, 104 und 106 mit einem Anschluss 610 für das Steuergerät MCM1 verbunden, der, wie weiter oben beschrieben, als integrales Teil des Kabelbaumverbinders KBV oder als eigenes Kabelbaum-Modul ausgeführt sein kann. Auch hier deuten die innerhalb des Kabelbaumverbinders KBV liegenden rautenförmigen Enden an, dass die Verbindung mit dem Anschluss innerhalb des Kabelbaumverbinders KBV erfolgt. Der Anschluss der Leitungen der einzelnen Kabelbaum-Module 102, 104 und 106 im Kabelbaumverbinder KBV kann bspw. über Klemm- oder Steckverbinder erfolgen. Die interne Verbindung zwischen den Kabelbaum-Modulen 102, 104, 106 und dem Anschluss 610 für das Steuergerät MCM1 kann über entsprechende Leitungen erfolgen, die bspw. frei oder als Teile einer Leiterplatte im Kabelbaumverbinder KBV verlegt sein können. In der Figur ist deutlich erkennbar, dass Kabelbaum-Modul 106 eine oder mehrere erste Leitungen umfasst, welche Steuergerät, Sensor oder Aktuator MCM4 mit Steuergerät, Sensor oder Aktuator MCM3 verbinden, sowie eine oder mehrere zweite Leitungen, die Steuergerät, Sensor oder Aktuator MCM4 mit Steuergerät MCM1 verbinden. Die ein oder mehreren ersten Leitungen können dabei ohne innerhalb des Kabelbaumverbinders KBV aufgetrennt zu werden durch diesen hindurchgeführt werden. Damit ist eine sichere Verlegung des einteiligen Kabelbaum-Moduls 106 vereinfacht. Die Abdichtung des Kabelbaumverbinders KBV an den Stellen, an denen das Kabelbaum-Modul 106 ein- bzw. austritt kann durch entsprechende Dichtmittel sichergestellt werden.

Die eckigen Klammern 600 deuten an, dass eine mechanische Verbindung des Kabelbaumverbinders KBV mit dem Steuergerät MCM1 möglich ist.

Figur 7 zeigt die schematische Darstellung einer Variante des modularen Kabelbaums aus Figur 6 mit dem erfindungsgemäßen Kabelbaumverbinder KBV. Die Variante entspricht der aus den Figuren 3 bzw. 5, in denen keine Verbindung zwischen Steuergerät MCM1a und Steuergerät, Sensor oder Aktuator MCM3 besteht und das entsprechende Kabelbaum-Modul 104 nicht vorhanden ist. Steuergerät MCM1a kann ein anderes Steuergerät als Steuergerät MCM1 aus Figur 6 sein, bei dem kein Anschluss für Steuergerät, Sensor oder Aktuator MCM3 vorhanden ist, es kann aber auch dasselbe Steuergerät MCM1 sein. Es ist sofort ersichtlich, dass am Steuergerät MCM1a selbst keine Änderung erforderlich ist; alle Änderungen können im Kabelbaumverbinder KBV vorgenommen werden. Lediglich der Segmentanschluss für das Kabelbaum-Modul 104 an den Kabelbaumverbinder KBV muss gegebenenfalls mittels eines Verschlusses oder anderer geeigneter Dichtmittel abgedichtet werden.

Bei einer Änderung einzelner Leitungen im Anschluss des Steuergerätes MCM1 muss nur der Kabelbaumverbinder KBV geändert werden, während die Anschlüsse für die übrigen Kabelbaum-Segmente unverändert bleiben können. Eine solche Änderung kann ggf. nur eine Änderung einer Steckbrücke erfordern, oder eine geänderte Verbindung einer internen Leitung innerhalb des Kabelbaumverbinders KBV, z.B. durch Umlegen einer internen Leitung auf einen anderen Klemm- oder Steckverbinder. Der Aufwand bei einer derartigen Änderung ist also gegenüber herkömmlichen Lösungen geringer.

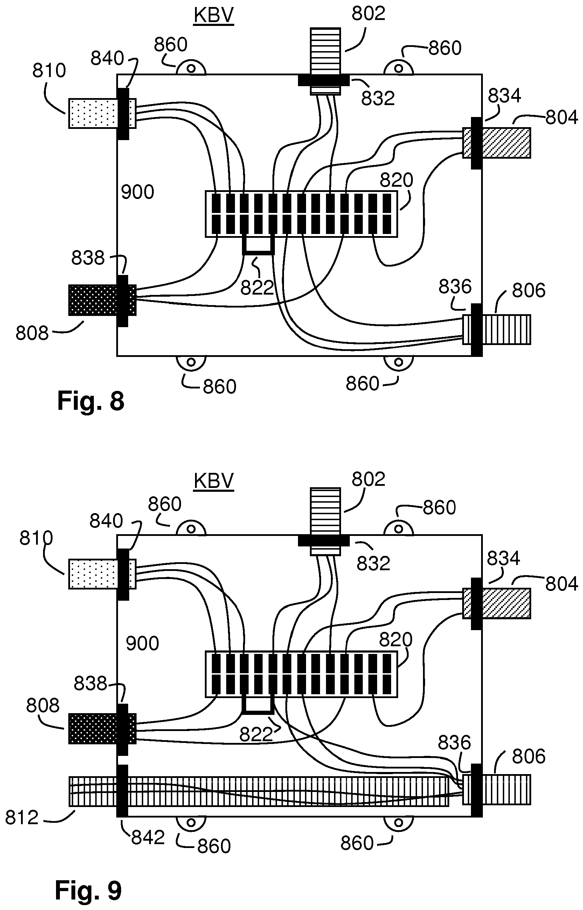

Figur 8 zeigt ein erstes exemplarisches Beispiel eines erfindungsgemäßen Kabelbaumverbinders KBV, an den Kabelbaum-Module 802, 804, 806, 808 und 810 angeschlossen sind. Die Kabelbaum-Module sind durch Kabelumhüllungen angedeutet, die jeweils mehrere in der Figur nicht einzeln bezeichnete Leitungen führen. Kabelbaumverbinder KBV umfasst außerdem einen auf einem Träger 900 angeordneten Anschlussblock 820, an den die einzelnen Leitungen der Kabelbaum-Module 802, 804, 806, 808 und 810 angeschlossen sind. Die Kabelbaum-Module sind an den Segmentanschlüssen 832, 834, 836, 838 und 840 mit dem Kabelbaumverbinder verbunden. Segmentanschlüsse 832, 834, 836, 838 und 840 können in der Figur nicht im Detail dargestellte Dichtmittel und/oder Mittel zur Zugentlastung aufweisen. Anschlussblock 820 kann unmittelbar mit einem auf der in der Figur nicht sichtbaren Unterseite des Kabelbaumverbinders KBV angeordneten Steckverbinder in Verbindung stehen, mittels dessen der Kabelbaumverbinder KBV mit einem Steuergerät verbunden ist. Es ist aber auch möglich, das Steuergerät über ein Kabelbaum-Modul an den Kabelbaumverbinder KBV anzuschließen, bspw. mit Kabelbaum-Modul 802. Die direkte Verbindung einzelner Kabelbaum-Module untereinander, unter Umgehung des Steuergerätes, kann mittels entsprechender Verbindungen 822 am Anschlussblock erfolgen, von denen aus Gründen der Übersichtlichkeit nur eine in der Figur dargestellt ist. Die mechanische Befestigung des Kabelbaumverbinders KBV an einem Einbauort kann mittels der mit dem Träger 900 verbundenen Ösen 860 erfolgen.

Figur 9 zeigt ein zweites exemplarisches Beispiel eines erfindungsgemäßen Kabelbaumverbinders KBV, an den Kabelbaum-Module 802, 804, 806, 808, 810 und 812 angeschlossen sind. Die Elemente der Figur entsprechen im Wesentlichen denen aus Figur 8. Das neu hinzu gekommene Kabelbaum-Modul 812 ist ein Teil des Kabelbaum-Moduls 806, dessen Leitungen durch den Kabelbaumverbinder KBV hindurchgeführt werden, ohne in diesem verbunden oder angeschlossen zu werden. An dem entsprechenden Segmentanschluss 842 sind lediglich Dichtmittel und/oder Mittel zur Zugentlastung vorgesehen.

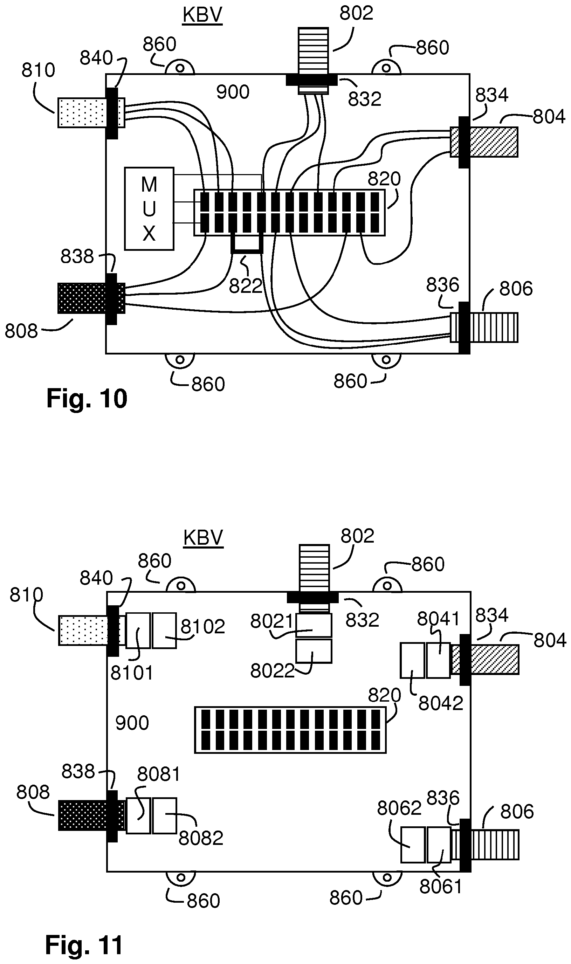

Figur 10 zeigt ein drittes exemplarisches Beispiel eines erfindungsgemäßen Kabelbaumverbinders KBV, an den Kabelbaum-Module 802, 804, 806, 808 und 810 angeschlossen sind. Die Elemente der Figur entsprechen im Wesentlichen denen aus Figur 8. Der in diesem Beispiel hinzugekommene Multiplexer MUX ist mit Leitungen von Kabelbaum-Modulen 802, 808 und 810 verbunden und eingerichtet, deren Signale, bspw. von Sensoren, selektiv an einen in der Figur nicht bezeichneten Sensoreingang des Steuergerätes anzulegen. Dadurch wird es ermöglicht, einen einzelnen Sensoreingang des Steuergeräts auf einfache Wise für den Anschluss mehrerer Sensoren zu erweitern. Die Ansteuerung des Multiplexers MUX kann bspw. durch eine ohnehin über den Kabelbaumverbinder geführte Kommunikationsschnittstelle des Steuergerätes erfolgen. In einem weiteren Ausführungsbeispiel ist zusätzlich ein Speichermodul, eine Messstelle und/oder ein Bluetooth Modul vorgesehen.

Wenn die Kabelbaum-Module jeweils mit Steckern 8021, 8041, 8061, 8081 und 8101 als Endverbinder ausgeführt sind, kann die Verbindung innerhalb des Kabelbaumverbinders KBV auch mittels entsprechender Buchsen 8022, 8042, 8062, 8082 und 8102 erfolgen, von denen aus die Leitungen mit dem Anschluss für das Steuergerät verbunden sind. Auch diese Verbindungen können über eine Leiterplatte oder über entsprechende Drahtbrücken erfolgen. Diese Variante ist in

Figur 11 schematisch dargestellt. Die Verbindung der einzelnen Leitungen der Kabelbaum-Module 802, 804, 806, 808 und 810 untereinander und mit dem Anschluss für das Steuergerät, der in dieser Figur durch den Anschlussblock 820 repräsentiert ist, ist aus Gründen der Übersichtlichkeit nicht in der Figur dargestellt.

**Bezugszeichenliste**

| | | | |
|---|---|---|---|
| MCM1 | Steuergerät | 8021 | Stecker |
| MCM1a | Steuergerät | 8022 | Buchse |
| MCM2 | Steuergerät, Sensor oder Aktuator | 8041 | Stecker |
| MCM3 | Steuergerät, Sensor oder Aktuator | 8042 | Buchse |
| MCM4 | Steuergerät, Sensor oder Aktuator | 8061 | Stecker |
| 100 | Kabelbaum | 8062 | Buchse |
| 102 | Verbindung / Kabelbaum-Modul | 8081 | Stecker |
| 104 | Verbindung / Kabelbaum-Modul | 8082 | Buchse |
| 106 | Verbindung / Kabelbaum-Modul | 8101 | Stecker |
| 108 | Steckverbinder | 8102 | Buchse |
| 108a | Steckverbinder | 900 | Träger |
| 109 | Buchse | | |
| 109a | Buchse | | |
| KBV | Kabelbaumverbinder | | |
| 600 | mechanische Verbindung | | |
| 610 | Steuergeräteanschluss | | |
| 802 | Kabelbaum-Modul | | |
| 804 | Kabelbaum-Modul | | |
| 806 | Kabelbaum-Modul | | |
| 808 | Kabelbaum-Modul | | |
| 810 | Kabelbaum-Modul | | |
| 812 | Kabelbaum-Modul | | |
| 820 | Anschlussblock | | |
| 822 | Verbindung | | |
| 832 | Segmentanschluss | | |
| 834 | Segmentanschluss | | |
| 836 | Segmentanschluss | | |
| 838 | Segmentanschluss | | |
| 840 | Segmentanschluss | | |
| 842 | Segmentanschluss | | |
| 860 | Öse | | |
| MUX | Multiplexer | | |

## Patentansprüche

1. Kabelbaumverbinder (KBV) für modulare Kabelbäume umfassend:
- einen Träger (900), wobei an dem Träger (900) zwei oder mehr Segmentanschlüsse (832, 834, 836, 838, 840, 842) zur Aufnahme jeweils eines Kabelbaum-Moduls (802, 804, 806, 808, 810, 812) vorgesehen sind,
- mindestens einem an dem Träger (900) angeordneten Anschluss für ein Steuergerät (MCM1, MCM1a), und
- mindestens einer an dem Träger (900) angeordneten Vorrichtung (820) zum Anschluss von Leitungen der Kabelbaum-Module (802, 804, 806, 808, 810, 812) an den mindestens einen Anschluss für das Steuergerät (MCM1, MCM1a) und zur Verbindung von Leitungen unterschiedlicher Kabelbaum-Module (802, 804, 806, 808, 810, 812), **dadurch gekennzeichnet, dass**
der Anschluss für das Steuergerät (MCM1, MCM1a) als Steckverbinder auf einer ersten, im eingebauten Zustand einem Steuergerät (MCM1, MCM1a) zugewandten Seite des Trägers (900) des Kabelbaumverbinders (KBV) liegt und in einen entsprechenden Anschluss des Steuergerätes (MCM1, MCM1a) eingreift.

2. Kabelbaumverbinder (KBV) nach Anspruch 1, wobei die Vorrichtung (820) zum Anschluss von Leitungen Steck- und/oder Klemmverbinder umfasst.

3. Kabelbaumverbinder (KBV) nach einem der vorhergehenden Ansprüche, wobei eine oder mehrere Leitungen eines ersten Kabelbaum-Moduls (806) mit entsprechenden Leitungen eines zweiten Kabelbaum-Moduls (808) innerhalb des Kabelbaumverbinders (KBV) direkt miteinander verbindbar sind.

4. Kabelbaumverbinder (KBV) nach Anspruch 3, wobei die Verbindung der einen oder mehreren Leitungen des ersten Kabelbaum-Moduls (806) mit entsprechenden Leitungen des zweiten Kabelbaum-Moduls (808) über entsprechende Leiterbahnen auf einer Platine oder über Steckanschlüsse, welche mittels elektrischen oder fluidführenden Leitungen verbunden sind, erfolgt.

5. Kabelbaumverbinder (KBV) nach einem oder mehreren der vorhergehenden Ansprüche, wobei die Segmentanschlüsse (832, 834, 836, 838, 840, 842) Mittel zur Aufnahme einer oder mehrerer Leitungen oder einer Kabelumhüllung aufweisen, in welcher eine oder mehrere Leitungen eines Kabelbaum-Moduls (802, 804, 806, 808, 810, 812) gemeinsam geführt sind.

6. Kabelbaumverbinder (KBV) nach einem oder mehreren der vorhergehenden Ansprüche, wobei die Segmentanschlüsse (832, 834, 836, 838, 840, 842), der Träger (900) oder ein die Segmentanschlüsse (832, 834, 836, 838, 840, 842) zumindest teilweise einschließendes Gehäuse Mittel zur Abdichtung gegen Umwelteinflüsse und/oder zur Zugentlastung für einzelne Leitungen oder eine leitungsbündelnde Kabelumhüllung aufweisen.

7. Kabelbaumverbinder (KBV) nach einem oder mehreren der vorhergehenden Ansprüche, wobei zwischen einem ersten und einem zweiten Segmentanschluss eine Vorrichtung zur Leitungsführung vorgesehen ist, die ein direktes Durchführen zumindest einiger der Leitungen eines Kabelbaum-Moduls (806, 812) ermöglicht.

8. Kabelbaumverbinder (KBV) nach einem oder mehreren der vorhergehenden Ansprüche, wobei der Träger (900) oder ein Gehäuse des Kabelbaumverbinders (KBV) eine oder mehrere Befestigungsvorrichtungen (860) zur Befestigung an einem Steuergerät (MCM1, MCM1a) und/oder einem anderen Einbauort aufweist.

9. Kabelbaumverbinder (KBV) nach einem oder mehreren der vorhergehenden Ansprüche, wobei der Träger (900) oder ein Gehäuse des Kabelbaumverbinders (KBV) oder mit dem Gehäuse verbundene Befestigungsmittel Mittel zur Entkopplung von mechanischen Schwingungen aufweist.

10. Kabelbaumverbinder (KBV) nach einem oder mehreren der vorhergehenden Ansprüche, wobei auf einer Leiterplatte des Kabelbaumverbinders ein Multiplexer (MUX) vorgesehen ist, der von mehreren Kabelbaum-Modulen (808, 810) kommende Signalleitungen wahlweise mit einer mit dem Steuergerät verbundenen Signalleitung verbindet und/oder ein Signalwandler vorgesehen ist, der ein von einem Kabelbaum-Modul (802, 804, 806, 808, 810, 812) kommendes Signal von einer Signalform in eine andere Signalform umsetzt.

11. Kabelbaum (100) zur Verbindung mehrerer Motorsteuergeräte mit zwei oder mehr Kabelbaum-Modulen (802, 804, 806, 808, 810, 812), welche mittels mindestens eines Kabelbaumverbinders (KBV) nach einem oder mehreren der vorhergehenden Ansprüche verbunden sind.

## Claims

1. A cable harness connector (KBV) for modular cable harnesses comprising:
- a carrier (900), wherein two or more segment connections (832, 834, 836, 838, 840, 842) are provided to accommodate in each case one cable harness module (802, 804, 806, 808, 810, 812),
- at least one connection arranged on the carrier (900) for a control unit (MCM1, MCM1a), and
- at least one device (820) arranged on the carrier (900) for connecting lines of the cable harness module (802, 804, 806, 808, 810, 812) to the at least one connection for the control device (MCM1, MCM1a) and for connecting lines of different cable harness modules (802, 804, 806, 808, 810, 812),
**characterized in that**
the connection for the control device (MCM1, MCM1a) as a plug connector lies on a first side of the carrier (900) of the cable harness connector (KBV) facing a control device (MCM1, MCM1a) in the installed state and engages in a corresponding connection of the control device (MCM1, MCM1a).

2. The cable harness connector (KBV) according to claim 1, wherein the device (820) for connecting lines comprises a plug- and/or clamp connector.

3. The cable harness connector (KBV) according to any one of the preceding claims, wherein one or more lines of a first cable harness module (808) can be directly connected with one another to corresponding lines of a second cable harness module (808) within the cable harness connector (KBV).

4. The cable harness connector (KBV) according to claim 3, wherein the connection of the one or more lines of the first cable harness module (806) to corresponding lines of the second cable harness module (808) is carried out via corresponding conductor paths on a circuit board or via plug-in connections, which are connected by means of electrical or fluid-transporting lines.

5. The cable harness connector (KBV) according to one or more of the preceding claims, wherein the segment connections (832, 834, 836, 838, 840, 842) have means for the accommodation of one or more lines or a cable sheath, in which one or more lines of a cable harness module (802, 804, 806, 808, 810, 812) are jointly routed.

6. The cable harness connector (KBV) according to one or more of the preceding claims, wherein the segment connections (832, 834, 836, 838, 840, 842), the carrier (900) or a housing at least partially enclosing the segment connections (832, 834, 836, 838, 840, 842) have means for sealing against environmental influences and/or for strain relief for individual lines or a line-bundling cable sheath.

7. The cable harness connector (KBV) according to one or more of the preceding claims, wherein between a first and a second segment connection a device for the line routing is provided, which makes possible a direct feedthrough at least of some of the lines of a cable harness module (806, 812).

8. The cable harness connector (KBV) according to one or more of the preceding claims, wherein the carrier (900) or a housing of the cable harness connector (KBV) has one or more fastening devices (860) for fastening to a control device (MCM1, MCM1a) and/or another installation site.

9. The cable harness connector (KBV) according to one or more of the preceding claims, wherein the carrier (900) or a housing of the cable harness connector (KBV) or fastening means connected to the housing has means for the decoupling of mechanical vibrations.

10. The cable harness connector (KBV) according to one or more of the preceding claims, wherein a multiplexer (MUX) is provided on a circuit board of the cable harness connector, which optionally connects signal lines coming from several cable harness modules (808, 810) to a signal line connected to the control device and/or a signal converter is provided, which converts a signal coming from a cable harness module (802, 804, 806, 808, 810, 812) from one signal shape into another signal shape.

11. A cable harness (100) for connecting several engine control units to two or more cable harness modules (802, 804, 806, 808, 810, 812), which are connected by means of at least one cable harness connector (KBV) according to one or more of the preceding claims.

## Revendications

1. Connecteur de faisceau de câblage (KBV) pour des faisceaux de câblage modulaires, comprenant :
- un support (900), dans lequel, sur le support (900), sont prévus deux raccordements de segments (832, 834, 836, 838, 840, 842) pour le logement respectivement d'un module de faisceau de câblage (802, 804, 806, 808, 810, 812),
- au moins un raccordement disposé sur le support (900) pour un appareil de commande (MCM1, MCM1a) et
- au moins un dispositif (820) disposé sur le support (900) pour le raccordement de conduites des modules de faisceaux de câblage (802, 804, 806, 808, 810, 812) à l'au moins un raccordement pour l'appareil de commande (MCM1, MCM1a) et pour la connexion de conduites de différents modules de faisceaux de câblage (802, 804, 806, 808, 810, 812),
**caractérisé en ce que**
le raccordement pour l'appareil de commande (MCM1, MCM1a) se trouve, en tant que connecteur enfichable, sur un premier côté, orienté, dans l'état monté, vers un appareil de commande (MCM1, MCM1a), du support (900) du connecteur de faisceau de câblage (KBV) et s'emboîte avec un raccordement correspondant de l'appareil de commande (MCM1, MCM1a).

2. Connecteur de faisceau de câblage (KBV) selon la revendication 1, dans lequel le dispositif (820) comprend, pour le raccordement de conduites, des connecteurs enfichables et/ou des connecteurs de serrage.

3. Connecteur de faisceau de câblage (KBV) selon l'une des revendications précédentes, dans lequel une ou plusieurs conduites d'un premier module de faisceau de câblage (806) peuvent être connectées directement entre elles avec des conduites correspondantes d'un deuxième module de faisceau de câblage (808) à l'intérieur du connecteur de faisceau de câblage (KBV).

4. Connecteur de faisceau de câblage (KBV) selon la revendication 3, dans lequel la connexion des unes ou plusieurs conduites du premier module de faisceau de câblage (806) avec des conduites correspondantes du deuxième module de faisceau de câblage (808) a lieu par l'intermédiaire de pistes conductrices correspondantes sur une platine ou par l'intermédiaire de raccordements enfichables qui sont reliés au moyen de conduites électriques ou conduisant des fluides.

5. Connecteur de faisceau de câblage (KBV) selon l'une ou plusieurs des revendications précédentes, dans lequel les raccordements de segments (832, 834, 836, 838, 840, 842) comprennent des moyens pour le logement d'une ou plusieurs conduites ou d'une enveloppe de câble, dans lequel une ou plusieurs conduites d'un module de faisceau de câblage (802, 804, 806, 808, 810, 812) sont guidées ensemble.

6. Connecteur de faisceau de câblage (KBV) selon l'une ou plusieurs des revendications précédentes, dans lequel les raccordements de segments (832, 834, 836, 838, 840, 842), le support (900) ou un boîtier englobant au moins partiellement les raccordements de segments (832, 834, 836, 838, 840, 842) comprennent des moyens pour l'étanchéité contre les influences environnementales et/ou pour la décharge de traction pour des conduites individuelles ou une enveloppe de câble regroupant les conduites.

7. Connecteur de faisceau de câblage (KBV) selon l'une ou plusieurs des revendications précédentes, dans lequel, entre un premier et un deuxième raccordement de segment, est prévu un dispositif pour le guidage de conduite, qui permet un passage direct d'au moins certaines des conduites d'un module de faisceau de câblage (806, 812).

8. Connecteur de faisceau de câblage (KBV) selon l'une ou plusieurs des revendications précédentes, dans lequel le support (900) ou un boîtier du connecteur de faisceau de câblage (KBV) comprend un ou plusieurs dispositifs de fixation (860) pour la fixation à un appareil de commande (MCM1, MCM1a) et/ou un autre endroit de montage.

9. Connecteur de faisceau de câblage (KBV) selon l'une ou plusieurs des revendications précédentes, dans lequel le support (900) ou un boîtier du connecteur de faisceau de câblage (KBV) ou le moyen de fixation relié avec le boîtier comprend des moyens pour de découplage des vibrations mécaniques.

10. Connecteur de faisceau de câblage (KBV) selon l'une ou plusieurs des revendications précédentes, dans lequel, sur un circuit imprimé du connecteur de faisceau de câblage (KBV), est prévu un multiplexeur (MUX) qui relie des conduites de signaux provenant de plusieurs modules de faisceaux de câblage (808, 810) de manière sélective avec une conduite de signaux reliée à l'appareil de commande et/ou un convertisseur de signaux est prévu, qui convertit un signal provenant d'un module de faisceau de câblage (802, 804, 806, 808, 810, 812) d'une forme de signal vers une autre forme de signal.

11. Faisceau de câblage (100) pour la connexion de plusieurs appareils de commande de moteurs avec deux modules de faisceaux de câblage (802, 804, 806, 808, 810, 812) ou plus, qui sont reliés au moyen d'au moins un connecteur de faisceau de câblage (KBV) selon l'une ou plusieurs des revendications précédentes.
